# EUROPEAN PATENT APPLICATION

(11) **EP 3 040 919 A1**
(43) Date of publication of application: **06.07.2016**
(21) Application number: 15184087.3
(22) Date of filing: 07.09.2015
(51) Int. Cl.: G06Q 10/08, G06F 9/50

(54) **AD-HOC SPECIAL DELIVERY SERVICES IN A DELIVERY NETWORK**

(30) Priority: 05.09.2014 NL 2013425
(71) Applicant: TNT Holdings B.V., 2132 LS Hoofddorp (NL)
(72) Inventor: SHAJPAL, Ashok, 2132 LS Hoofddorp (NL)
(74) Representative: De Vries & Metman

(57) **Abstract**

A method is described for determining an ad-hoc parcel special delivery service in a delivery network comprising origin depots and destination depots, wherein the method comprises: receiving a customer request for delivery of at least one parcel from a collection address to a delivery address, the request comprising service information; determining whether standard collection of said parcel by an origin depot and standard delivery by a destination depot of said delivery network is possible on the basis of said service information and depot information of said origin depot and said destination depot respectively; and, if collection by said origin depot and/or delivery by said destination depot is not possible, executing a distance service for determining whether delivery of said parcel via said origin depot and said destination depot is possible by ad-hoc special collection of said parcel from said collection address to said origin depot and/or ad-hoc special delivery from said destination depot to said delivery address.

## Description

### Field of the invention

The invention relates to ad-hoc Special delivery services in a delivery network and, in particular, though not exclusively, to a software-implemented method for enabling the determination of viable ad-hoc Special delivery services in a delivery network, a server system configured for enabling the determination of viable ad-hoc delivery services in a parcel delivery network, and a computer program product for executing said method.

### Background of the invention

Parcel delivery systems nowadays offer online delivery services wherein customers may select a certain standardized delivery service for delivering packages or items from a collection address to a delivery address within a certain delivery time. In order to deliver the packages in a standardized way with a high throughput, the parcel delivery system uses a delivery network comprising depots that are located in different geographical areas (depot zones) of a geographical area and that are configured to process parcels.

A depot may be configured as an origin depot and/or a destination depot or typically both. An origin depot may be configured to receive parcels that need to be delivered to a different destination depot. A destination depot may be configured to receive parcels from different origin depots and process these parcels so that they can be delivered to addresses within the depot zone of the destination depot. Each depot has its own processing or throughput time. If a parcel is received within a certain time window by a depot, then these parcels can be processed within a predetermined time so that timely delivery can be guaranteed.

Non-standard, ad-hoc delivery services (also referred to as special delivery services) that cannot be dealt with by a standardized delivery service are also processed by the parcel delivery company. A customer request for a non-standard delivery may be dealt with by the customer service of the parcel delivery company. Once the customer's requirements are collected and identified, the customer is informed that he or she will be called back once a customized solution and quote is determined. Meanwhile, the customer service agent may identify local vendors (sub-contractors) that could meet the requirements of the delivery request, assesses the quotes of the local vendors and identifies the most appropriate vendor based on service quality and price.

The determination of the availability of these services and the quotation process for these ad-hoc special services are however slow if performed manually, especially when a customer would like to receive quotes for different options and/or variations of the delivery service. Delays in the quotation process often result in reduced customer satisfaction and could even lead to a customer going to another parcel delivery company that is able to provide quotations faster.

Hence, from the above, it follows that there is need in the art for improved parcel delivery systems for special services that alleviate at some of the problems of the prior art parcel delivery systems. In particular, there is need in the art for improved parcel delivery systems that allow real-time determination of viable ad-hoc special delivery services (non-standard delivery services) and real-time quotation of such determined delivery services in response to a customer request. This is particularly required to address high volumes of customer requests for ad-hoc special services.

### Summary of the invention

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "module" or "system." Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non- exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electromagnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram.

The flowcharts and block diagrams in the figures illustrate the architecture, functionality, and operation of possible implementations of systems, methods and computer program products according to various embodiments of the present invention. In this regard, each block in the flowcharts or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

It is an objective of the invention to reduce or eliminate at some of the drawbacks known in the prior art. In an aspect the invention may relate to a computer-implemented method for enabling the determination of ad-hoc (non-standard) parcel delivery services in a delivery network comprising one or more origin depots and one or more destination depots.

In an embodiment, the method may comprise: receiving a customer request for delivery of at least one parcel from a collection address via an origin depot and a destination depot to a delivery address, the request comprising a requested collection and delivery time; if said requested collection time and/or delivery time does not allow standard collection by said origin depot and/or standard delivery by said destination depot, requesting a distance service based on vehicle type needed to accommodate the weight and dimensions of the parcel to calculate the traveling time between said collection address and said origin depot and/or between said destination depot and delivery address, said traveling time enabling determining whether ad-hoc (non-standard) collection of said parcel from said collection address to said origin depot and/or ad-hoc (non-standard) delivery from said destination depot to said delivery address is possible; wherein requesting said distance service comprises: sending a request for distance calculation of said traveling time to at least one server comprising a load-balancing module; wherein said load-balancing module uses geographical information in said distance request to relay said distance request to at least one distance calculation server of a plurality of distance calculation servers, each server hosting a distance calculation function for calculating travel information between two or more locations in a predetermined geographical area.

Hence, in response to customer requests the method enables a parcel delivery system to determine the availability of one or more ad-hoc special delivery services (i.e. non-standard delivery services which need to be determined by the system on an ad-hoc basis) in a delivery network that is configured to deliver parcels from a collection address via one or more depots (and hubs) to a delivery address. This way, the types of delivery services that can be offered via the delivery network can be extended and a more efficient use of the capabilities of the delivery network infrastructure is realized.

The availability of viable ad-hoc services is dynamically checked by requesting travel information from a distance service. As large amounts of traveling time calculations need to be undertaken in real-time and in parallel to support multiple concurrent users of the parcel delivery system, multiple (virtual) servers in a clustered configuration may be used to effectively perform parallel processing of the distance and travelling time computations. Each virtual server may be executed by a CPU so that the load of the multiple distance calculation can be distributed over multiple servers.

In an embodiment, requesting said distance service may further comprise: determining geographical location information on the basis of at least part of a collection address, an origin depot, a delivery address and/or a destination depot in said distance request; using said geographical location information for selecting said server from said plurality of servers. Map data sets for different geographical areas, e.g. Europe, Americas and the rest of the world, may be deployed to separate server clusters so that one or more load balancers may be used to effectively spread the distance calculation requests across the different servers. To that end, the load balancer may be configured to receive distance requests and examine the geographical information in the request in order to relay distance request to the appropriate servers of the distance service in accordance with a certain load-balancing algorithm.

In an embodiment, said servers may be configured to send processing load information to said load-balancing module, said load-balancing module using said processing load information in combination with said geographical information for relaying said distance request to said at least one server. Hence, if multiple servers are capable of processing the distance request, the load-balancer may use the load information of the distance servers in order to select a server that has sufficient processing resources to calculate the travel information within a short time period.

In an embodiment said plurality of servers may be associated with a cache for storing travel information that is calculated by said distance calculation functions in said servers, wherein requesting said distance service may further comprise: before sending said distance request to said load-balancing module, determining whether said requested travel distance is stored in said cache.

In a further embodiment, executing said distance services may comprise: determining if travel information associated with: a collection address and an origin depot; and/or, a delivery address and a destination depot is stored in said cache; if said travel information cannot be found in said cache, executing said distance calculation function on the basis of the collection address and/or delivery address associated with said customer request, vehicle type and relevant road network (map) data; and, storing said travel information and the associated collection address and/or delivery address in said cache.

Hence, in order to provide a scalable solution for determining ad-hoc delivery services and quotations for these ad-hoc services real-time the distance service may use a dedicated caching mechanism in order to reduce the processing load due to substantial amounts of requests for calculating distances in response to customer requests.

In an embodiment, said method may further comprise: determining whether collection of said parcel by an origin depot and delivery by a destination depot of said delivery network is possible on the basis of said requested collection and delivery time and on the basis of depot information of said origin depot and/or said destination depot, said depot information comprising a standard collection and delivery time schedule.

In an embodiment, the method may further comprise: determining an origin depot on the basis of said collection address, said origin depot being configured to collect parcels in a predetermined collection area associated with said origin depot on the basis of said standard collection time schedule, said schedule comprising origin collection time windows and associated origin depot processing start times.

In an embodiment, the method may further comprise: determining a destination depot on the basis of said delivery address, said destination depot being configured to deliver parcels in a predetermined delivery area associated with said destination depot on the basis of said standard delivery time schedule, said schedule comprising destination collection time windows and associated destination depot processing end times.

In an embodiment, collection by said origin depot is not possible if the requested collection time in said service information is not within a collection time window of said origin depot, and, optionally, if the parcel weight, parcel volume and/or parcel type identified in said service information cannot be processed by said origin depot. In an embodiment, delivery by said destination depot is not possible if said requested collection time is not within a delivery time window of said destination depot, and, optionally, if the parcel weight, parcel volume and/or parcel type identified in said service information cannot be processed by said destination depot.

Hence, in the above embodiments, depots are assigned to the collection and delivery addresses on the basis of the geographical location of the depots and the addresses. For example, an origin depot that has a collection area in which the collection address is located may be assigned to the collection address. Additionally, the parcel processing capabilities of a depot (e.g. weight, volume and/or parcel types that can be processed at a depot) may be taken into account when assigning a depot to a collection or a destination depot.

Further, the process may determine whether an assigned depot is capable of collecting and/or delivering a parcel on the basis of its standard collection/delivery services that are predefined on the basis of collection and delivery time schedules, wherein a time schedule may include time windows for collection or delivery of parcels by a depot and associated depot processing start and end times. For example, an origin depot may have a time schedule comprising each day one or more standard collection time windows wherein parcels are collected by the origin depot using a standard collection service. The processing of the parcels at the depot that are collected that day by said origin depot is started at the depot processing start time.

In an embodiment, said distance service may comprise a computer configured for executing a distance calculation function for calculating travel information, preferably a traveling time and/or distance between an address and a depot, and a cache for storing travel information calculated by said distance calculation function.

In an embodiment, executing said distance service for determining travel information may include: determining an origin depot traveling time between said collection address and said origin depot; and/or, a destination depot traveling time between said destination depot and said delivery address.

In an embodiment, the method may further comprise: if said requested collection time plus said calculated origin depot traveling time is earlier than the origin depot processing start time associated with said collection time window; and, if said requested delivery time is within the delivery time window of said destination depot, reporting that delivery of said parcel via said origin depot and said destination depot is possible by execution of an ad-hoc collection service for collection of said parcel from said collection address to said origin depot and delivery of said parcel by said destination depot to said delivery address.

In an embodiment, the method may further comprise: if said requested collection time is within the collection time window of said origin depot; and, if the destination depot processing end time associated with said delivery time window plus said calculated destination depot traveling time is earlier than said requested delivery time, reporting that delivery of said parcel via said origin depot and said destination depot is possible by collection of said parcel by said origin depot and execution of an ad-hoc delivery service for delivery of said parcel from said destination depot to said delivery address.

In an embodiment, the method may further comprise: if said requested collection time plus said calculated origin depot traveling time is earlier than the origin depot processing start time associated with said collection time window; and, if the destination depot processing end time associated with said delivery time window plus said calculated destination depot traveling time is earlier than said required delivery time, reporting that delivery of said parcel via said origin depot and said destination depot is possible by execution of an ad-hoc collection service for collection of said parcel from said collection address to said origin depot and execution of an ad-hoc delivery service for delivery of said parcel from said destination depot to said delivery address.

Hence, on the basis of the calculated travel times by the distance service it can be determined that ad-hoc services in said delivery network are possible that have a requested collection time outside the normal origin depot collection time window, but before origin depot processing start time; and/or, ad-hoc delivery services that have a delivery time that is outside the normal destination depot delivery time window, but later than the destination depot processing end time. These services may be reported to the parcel delivery system, which may - in response - determine a price (a quote) for these services before presenting the information via an interface, e.g. web service or a mobile application, to the customer that requested a delivery service.

In a further aspect, the invention may relate to a server system for use in a delivery network comprising one or more origin depots and one or more destination depots, the server system comprising: a computer readable storage medium having computer readable program code embodied therewith, said program code being configured for determining ad-hoc parcel delivery services in delivery network, and a processor, preferably a microprocessor, coupled to the computer readable storage medium, wherein responsive to executing the computer readable program code, the processor is configured to perform executable operations comprising: receiving a customer request for delivery of at least one parcel from a collection address via a origin depot and a destination depot to a delivery address, the request comprising a requested collection and delivery time; if said requested collection time and/or delivery time does not allow collection by said origin depot and/or delivery by said destination depot, requesting a distance service calculation of the traveling time between said collection address and said origin depot and/or between said destination depot and delivery address, said traveling time enabling determining whether ad-hoc collection of said parcel from said collection address to said origin depot and/or ad-hoc delivery from said destination depot to said delivery address is possible; wherein requesting said distance service comprises: sending a distance request for calculation of said traveling time to at least one server comprising a load-balancing module; wherein said load-balancing module uses geographical information in said distance request to relay said distance request to at least one distance server of a plurality of distance servers, each server hosting a distance calculation function for calculating travel information between two or more locations in a predetermined geographical area.

In an embodiment, said distance service may comprise a distance calculation function for calculating travel information, preferably a traveling time and/or distance between an address and a depot, and a cache for storing travel information calculated by said distance calculation function; and, wherein said executable operations associated with said distance service comprise: determining if travel information associated with a collection address and an origin depot; and/or, a delivery address and a destination depot is stored in said cache; if said travel information is not stored in said cache, executing said distance calculation function on the basis of the collection address and/or delivery address associated with said customer request; and, storing said travel information and the associated collection address and/or delivery address in said cache.

The invention may also relate to a program product comprising software code portions configured for, when run in the memory of a computer, executing the method steps as described above.

The invention will be further illustrated with reference to the attached drawings, which schematically will show embodiments according to the invention. It will be understood that the invention is not in any way restricted to these specific embodiments.

### Brief description of the drawings

**Fig. 1** depicts at least a part of a parcel delivery system according to an embodiment of the invention.
**Fig. 2A** and **2B** depict the back-end of a parcel delivery system for delivering a parcel from a collection address to a delivery address.
**Fig. 3A** and **3B** depict collection and delivery timing schemes for a parcel delivery system according to an embodiment of the invention.
**Fig. 4** depicts a data structure for a parcel delivery system according to an embodiment of the invention.
**Fig. 5** depicts a server system for a parcel delivery system according to an embodiment of the invention.
**Fig. 6** depicts a caching system for a parcel delivery system according to an embodiment of the invention.
**Fig. 7** depicts a process flow that may be executed by a distance service module according to an embodiment of the invention.
**Fig. 8A-8C** depict flow charts of processes for determining the availability for non-standard delivery services in a parcel delivery system according to an embodiment of the invention.
**Fig. 9** depicts a flow chart of a process for determining the availability for a non-standard delivery service in a parcel delivery system according to another embodiment of the invention.
**Fig. 10** depicts a block diagram illustrating an exemplary data processing system that may be used in a parcel delivery system according to the invention.

### Detailed description

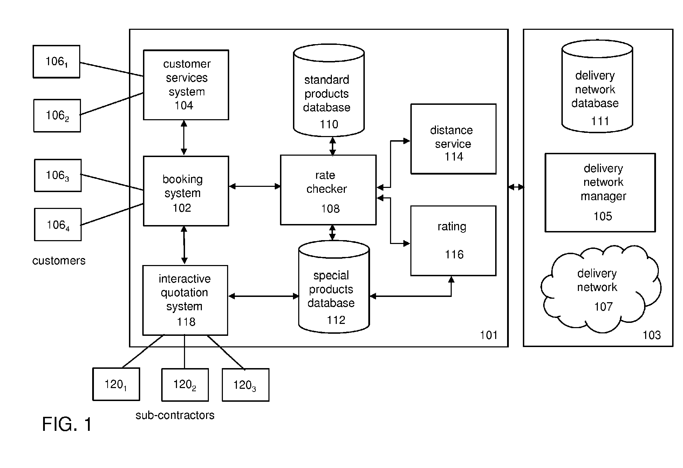

**Fig. 1** depicts at least a part of a parcel delivery system according to an embodiment of the invention. The parcel delivery system may comprise a front-end system **101** and a back-end system **103.** The front-end of the parcel delivery system may be configured to communicate with different user-interfaces such as customer terminals and sub-contractor terminals. In particular, the front-end system of the parcel delivery system may receive customer requests and in response to these requests, it may determine whether one or more parcel delivery services are available for the particular customer request.

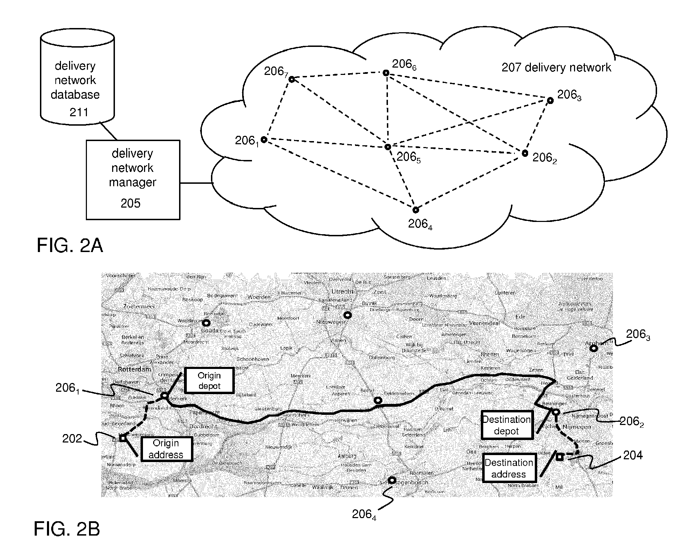

Once the customer selects and agrees on a particular parcel delivery service that is offered by the parcel delivery system, the delivery process is further handled by the back-end **103** of the parcel delivery system. To that end, the back-end system may comprise a delivery network manager **105** for controlling the delivery processes that are handled by the delivery network. In particular, the delivery network manager **105** may receive requests for parcel services from the front-end and execute these parcel services via the delivery network **107.** The back-end may further comprise a delivery network database **111** for storing information on the delivery network, e.g. information on the locations between the basic entities forming the delivery network (e.g. parcel processing depots and/or hubs), the distances and traveling distances between the entities and the average time that a depot needs for processing a parcel. The delivery network manager, the delivery network database and the delivery network are described in more detail with reference to **Fig. 2A** and **2B****.**

The parcel delivery system may offer different delivery services, e.g. standard delivery services and non-standard delivery services, for collecting parcels from a collection address and delivery of parcels to a delivery address. Non-standard delivery services relate to delivery services that that cannot be processed by the standard delivery services. Non-standard delivery services include delivery of non-standard, non-standard deliveries that cannot be delivered on the basis of the standard delivery services. Non-standard deliveries may e.g. include non-standard parcels such as large volume objects or living animals. Hereunder, the term "parcel" may include any type of consignment of cargo for shipment.

The front-end system **101** may process customer requests from customers that may contact the system directly via a (central) booking system **102** or a customer services system **104.** The booking system **102** may be accessed via a user interface, e.g. a web-interface. For example, a customer may use a customer terminal **106₁₋₄**, e.g. a computer, a smartphone, an electronic tablet, etc. in order to fill in a customer request form. A customers request may comprise information on a desired delivery service, including: a parcel type, parcel dimensions and weight, origin (collection) address of the parcel, a destination (delivery) address of the parcel and collection time and, optionally, a delivery time. Customer requests that are sent to the booking system may be forwarded to the rate checker module **108** that is configured to check which delivery services and associated prices are available within the constraints given by the information in the customer request.

The rate checker module **108** may use the information in the standard products database **110** and the delivery network database **111** in order to see whether a customer request can be processed on the basis of a standard service.

The parcel delivery system may offer standard services wherein parcels are delivered via the delivery network to the destination in order to guarantee high throughput delivery. To that end, the standard services are defined on the basis of (static) standard product information that is stored in the standard products database. The standard product information may define different standard products on the basis of parcel-type, weight and/or volume, delivery time, etc. Each product may be identified by a standard product code.

Further, the delivery network database **111** may comprise the locations of the depots that form the parcel delivery network. A depot in the delivery network may be configured to process the parcels (e.g. receive, scan, identify and sort parcels in accordance with their addresses, weight, and/or parcel type and prepare the thus processed parcels for delivery to the delivery address or a further depot in the delivery network). The delivery network database may further comprise the distances and travelling times between depots in the delivery network as well as the standard processing time that a depot requires in order to process a parcel. The time that is needed to process a parcel by a depot may be referred to as the depot processing time.

A depot may have at least two distinct functions.

An origin depot may be configured to collect parcels for transportation to other depots that are configured for delivery of parcels to a delivery address (destination depots). The collection by the origin depot is based on standard collection services that collect parcels according to a standardized (static) collection scheme within a predetermined geographical area associated with the origin depot. The time taken to collect parcels by the origin depot (using standard collection) is referred to as the origin collection time.

Similarly, a destination depot may be configured to receive parcels from origin depots (or other depots that are used for transit) and process parcels for delivery to the delivery addresses. Standard delivery by the destination depot may be realized according to a standardized (static) delivery scheme within a geographical area associated with the destination depot. The time it takes a destination depot to deliver parcels (using standard delivery) is referred to as the destination delivery time.

The standard product database may comprise information that define standard delivery services that can be offered by the parcel delivery system, including: the origin collection time and the destination delivery time of depots, the processing time of a parcel by a depot and the distance and traveling time between the origin depots and destination depots.

For example, if a parcel is collected at a certain collection time instance by a standard collection service associated with an origin depot, the information in the standard products database and the delivery network database can be used to determine the time when the parcel will be delivered by certain destination depot (i.e. the destination depot associated with the delivery address of a parcel) at the delivery address. Similarly, if a parcel needs to be delivered at a certain time by the standard delivery service associated with a destination depot, than the information in the standard products database and the delivery network database can be used to determine at what time the parcel should be collected by the origin depot.

Hence, on the basis of information in the standard products database and the delivery network database, the rate checker module may check whether the customer request can be satisfied by a standard service and if it determines that it is possible, it will identify one or more standard services, associated standard prices and estimated time of arrivals of the parcel. Due to the fact the parameters for standard services are static, certain customer request cannot be processed. Thus, in order to extend the capabilities of the parcel delivery system to non-standard special services (i.e. services associated with parcels that at a given time instance cannot be satisfied by the standard delivery services) the parcel delivery system may further comprise a non-standard products database **112** and a distance service module **114.**

As will be described hereunder in more detail, the rate checker module may be configured to use the information in the standard and non-standard product databases and delivery network database in order to determine whether a customer request can be processed as a standard service or as a non-standard ad-hoc delivery service. In case of a non-standard delivery service, the rate checker module may execute a process for determining the availability of one or more non-standard delivery services and calculating associated quotes in response to a customer request.

The rate checker may invoke the distance service module **114** for requesting distances and travelling times that need to be determined for determining the availability of non-standard delivery services. A distance request may comprise waypoints of the requested route, including a collection address, an origin depot and a destination depot, a delivery address, and, optionally, one or more via-stations (e.g. hubs and/or a depots between the origin and destination depot). The information that the distance service module is calculating, including the traveling times and/or distances between an address and a depot and/or between two addresses may hereafter be generally referred to as travel information.

After the rate checker module has identified that one or more non-standard delivery services are available for a customer request, the rate checker module may send the identified services in a rating request to the rating module **116,** which is configured to generate price quotes on the basis of the information in the rating request. A rating request may comprise information that the rating module uses for calculating a price quote for the (non-standard) ad-hoc delivery services that are available for the customer request. This information may include a product code, collection and delivery address, weight and/or volume.

The pricing module may generate quotes and send the quotes back to the rate checker, which will forward the quotes via the booking system to the user interface of the customer requesting the delivery service. As the ad-hoc services may include non-standard delivery types that require services of sub-contractors, the parcel delivery system may further comprise an interactive quotation system **118.** The interactive quotation system may comprise a web interface for sub-contractors. Sub-contractors may use a user interface **120₁₋₃** for entering bids for certain types of non-standard vehicle deliveries.

While the databases and modules defined in **Fig. 1** are illustrated as separate functional entities, all or some parts of these modules and/or databases may be part of or integrated with other functional module and/or databases. Moreover, some modules and/or databases may be implemented as one functional module and/or database.

The process of determining the availability of one or more standard and/or ad-hoc delivery services and associated quotes in response to a customer request needs to be sufficiently fast so that customers do not need to wait for the requested information. In practice, this means that the system should be able to generate the requested information real-time, without degrading the user experience, even when it has to process many customer requests (e.g. tens of thousands of customer requests) per time unit.

**Fig. 2A** and **2B** depict a schematic of a delivery network system comprising a delivery network manager **205** that is communicatively connected to a delivery network **207** and a delivery network database **211.** As shown in **Fig. 2A****,** the delivery network **207** may comprise a plurality of depots **206₁₋₆**, each comprising a parcel management system configured to process parcels. The parcel management systems of the depots may be communicatively connected to the delivery network manager, which centrally manages and monitors the delivery processes that are executed by the depots.

The delivery network database **211** may comprise depot identifiers (e.g. an unique code, (part of) an IP address or universal resource identifier (URI)), geographical (geo-coded) depot locations and parameters that may be used to identify or control depot processes. These parameters may e.g. include the distance and travel time from on depot to another depot, depot process identifiers for identifying certain parcel processing schemes and depot processing times. The delivery network manager may use the information in the delivery network database to control the depot.

The depots locations may be mapped on digital roadmap data as shown in **Fig. 2B****.** This way, routes between different depots may be visualized for the users of the system. Further, the parcel delivery system may use the digital roadmap data for determining the distance and traveling times between (geocoded) addresses and depots.

For example, a customer request for a parcel delivery service may include a collection address **202** and a delivery address **204** (i.e. the address where the parcel should be delivered). When processing customer requests, the rate checker module may use the information of the delivery network database in order to determine an origin depot **206₁** from a set of depots **206₁₋₆** of the parcel delivery system. The origin depot may be a depot that is close or closest to the collection address and that is capable of processing the parcel type that is identified in the customer request. Similarly, it may determine a destination depot **206₂** from the set of depots **206₁₋₆** of the parcel delivery system that is close or closest to the delivery address and that is capable of processing the parcel type that is identified in the customer request. The information stored in the delivery network database may also be used to determine the distance and/or the standard travelling time between an origin and destination depot.

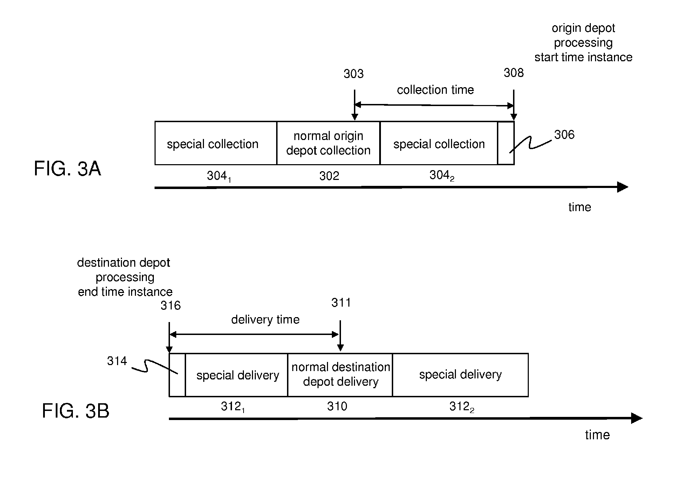

Further, the delivery network database may comprise information on the parcel collection and delivery by the depots and the processing time of parcels at the depots. This is schematically illustrated in **Fig. 3A** and **3B****.** In particular, **Fig. 3A** schematically depicts a (standard or normal) time schedule of the collection process of parcels by the origin depot. Parcels that are processed on the basis of a standard delivery service should be collected by the origin depot within the (normal) origin depot collection time window **302** in order to be processed by the parcel management system of the origin depot at time instance **308,** the origin depot processing start time, which may be stored together with the associated origin depot collection time window in the delivery network database. For example, the time schedule of **Fig. 3A** may relate to periodic (e.g. daily) standard collection process by the origin depot wherein each time period parcels are collected within a collection time window and subsequently processed at the associated origin processing start time.

Similarly, **Fig. 3B** shows a time schedule of a delivery process of parcels by a destination depot. Time instance **316,** the destination depot processing end time, marks the end of the processing of a parcel by the parcel management system of the destination depot. Thereafter, a parcel will be delivered at a time instance located within the normal destination depot delivery time window **310.** The destination depot processing end time may be stored together with the destination depot delivery time window **310** in the delivery network database. Hence, the time schedule of **Fig. 3B** may relate to periodic (e.g. daily) standard delivery process by the destination depot wherein each time period parcels that have been processed by the destination depot are delivered by the depot to the delivery address within a delivery time window.

Time schedules of depots may be different for different origin and destination depots. Furthermore, time schedules may be different for different parcels (different weights, volumes and/or types). Hence, the availability of certain ad-hoc services by the delivery network may depend on the collection and delivery addresses and the parcel itself.

As will be described hereunder in more detail, the parcel delivery system according to the invention is configured to provide ad-hoc delivery services that have a collection time **303** outside the normal origin depot collection time window, but before origin depot processing start time; and/or, to provide ad-hoc delivery services that have a delivery time **311** that is outside the normal destination depot delivery time window, but later than the destination depot processing end time.

The rate checker may execute a process wherein these conditions are checked and if at least one of these conditions applies, then the rate checker may calculate the information that is necessary in order to determine the type of non-standard delivery service and a quote associated with the delivery service. A non-standard products database may be used to define the non-standard delivery services in terms of parcel type, weight, volume, delivery type, etc. An ad-hoc delivery service may be linked to information in the delivery network database, e.g. the depot ID, so that the system is able to identify which depot(s) are able to process a certain non-standard delivery service.

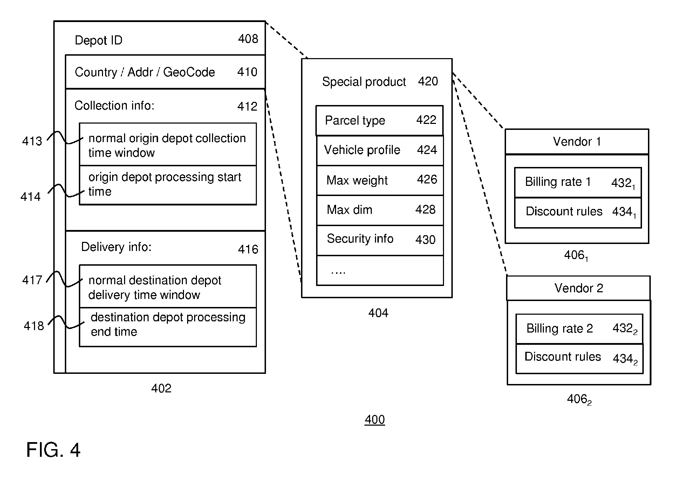

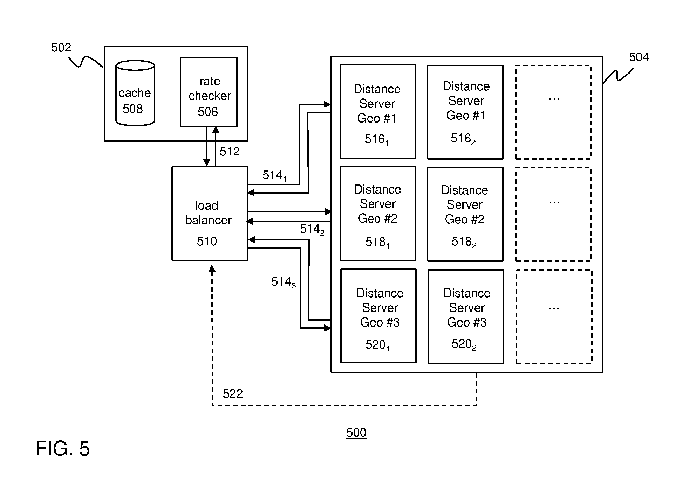

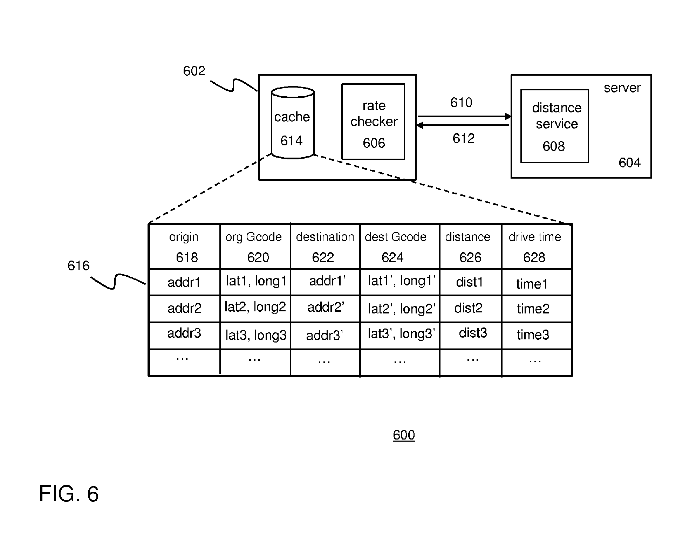

**Fig. 4** depicts data structures for a parcel delivery system according to an embodiment of the invention. In particular, **Fig. 4** depicts parts of data structures for storing depot information **402** associated with a depot of the parcel delivery system, non-standard product information **404** associated with a non-standard ad-hoc delivery service that can be processed by a depot and vendor information **406_{1,2}** associated with vendors that are capable of ad-hoc collection and delivery services for predetermined ad-hoc delivery services that will be described in more detail hereunder with reference to **Fig. 5** and **6****.**

The depot information **402** may comprise a depot identification number **408,** a country code and the (geo-coded) address of the depot **410.** Further, the depot information may comprise depot collection information **412** (i.e. information on the collection process of the particular depot). The collection information may include the normal origin depot collection time window **413** and an origin depot processing start time **414** as described with reference to **Fig. 2** and **3****.** Further, the depot information may comprise depot delivery information **416** (i.e. information on the delivery process of the particular depot). The delivery information may comprise the normal destination depot delivery time window **417** and a destination depot processing end time **418** as described with reference to **Fig. 2** and **3****.** Depot information on depots that are available to the delivery system may be stored in the delivery network database.

The ad-hoc delivery service may include ad-hoc collection of parcels from a collection address to an origin depot and/or ad-hoc delivery of a parcel from a destination depot to a delivery address. Hence, to that end, depot information may point to non-standard product information **420** that is valid for one or more depots. For example, within a particular geographical zone around the depot (e.g. defined by one or more postal codes, zip codes or a certain radius around the depot), different non-standard delivery products (e.g. ad-hoc transportations of a particular parcel type), may be available. To that end, the non-standard product information may comprise information on the parcel type **422,** vehicle information **424** (e.g. in the form of a vehicle profile) that is needed for transportation of parcel of a certain parcel type. Further, the non-standard product information may comprise information on the maximum weight **426** and/or maximum dimensions **428** of the parcel. Further, the non-standard product information may comprise security information **430** associated with the parcel, e.g. security measures associated with chemical products, animals, etc.

Further, non-standard product information may be linked to one or more vendors (e.g. sub-contractors) that may have specified a certain billing rate **432_{1,2}** and, optionally, discount rules **434_{1,2}**, for the non-standard product. The vendor information may be provided and updated via the interactive quotation system of the parcel delivery system.

As will be described hereunder in more detail, the parcel delivery system according to the invention provides a scalable solution for provide real-time quotations for ad-hoc delivery services. In particular, the parcel delivery system should be able to process more than 20000 quotations per day. Therefore some modules of the parcel delivery system such as the rate checker system may be executed on a mainframe. Modules that should provide data to the rate checker module upon request should be implemented such that the response time of the modules, such as the distance service module, is small as possible so that processes that are running on the mainframe do not have to wait.

Calculating distances and traveling times on the basis of digital road map data is known per se. For example, US2011/0251789 describes a system for calculating and planning routes for logistics. Typically these calculations can be very resource intensive, especially when actual traffic information and route preferences need to be taken into account and many distance requests need to be processed at the same time. Hence, in order to provide a scalable solution for ad-hoc delivery services in a delivery network that is capable of processing many customer requests in parallel, measures should be taking in order to reduce the load on the distance service as much as possible. To that end, the distance service may be implemented on the basis of architecture as shown in **Fig. 5****,** wherein the rate checker module **506** may be hosted on a computer system **502,** e.g. a mainframe or one or more servers, that is connected via one or more load-balancers **510** to a server system **504.**

The multiple (virtual) servers **516₁₋ₙ**, **518₁₋ₙ**, **520₁₋ₙ** may be used in a clustered configuration so that multiple distance requests originating from the rate tracker may be effectively processed in parallel. Each virtual server may be executed by a CPU so that the load of the distance calculations can be distributed over multiple servers. In an embodiment, different server clusters may use different data sets associated with different geographical areas (e.g. Europe, Americas and the rest of the world).

One or more load balancers **510** are used to effectively spread the distance calculation requests across the different servers. In particular, the load balancer may receive distance requests **512** from the rate checker module and examine the geographical information in the request in order to relay distance request **514₁₋₃** to the appropriate servers of the distance service in accordance with a certain algorithm.

In an embodiment, the distance service may be configured to send feedback information **522,** e.g. the load distribution of the different servers, to the load balancer. The load distribution in the feedback information may be used by the load balancer to send distance requests to particular servers that have a relatively low resource load. This way, the resources of the distance services may be efficiently used. The rate checker may be further connected to a cache **508** that is configured to store travel information that is generated on the basis of a distance request. The content of the cache may be used to optimize the use of the CPU intensive distance service module, which is described in more detail with reference to **Fig. 6****.**

**Fig. 6** depicts an implementation of a distance service module wherein a cache **614** is used for optimizing the use of the computing intensive distance calculation algorithm **608.** During the execution of the distance service, information in a distance requests **610** and the travel information in an associated distance responses **612** may be stored in a cache **716,** i.e. a fast accessible temporarily memory, so that calculations are performed once by the distance service module and the stored travel information in the cache can be reused multiple times by the rate checker module. In an embodiment, information stored in the cache may include addresses **618,622** and/or geo-coded addresses **620,624** and distance **626** and traveling times **628** associated with (geo-coded) addresses.

Hence, before the rate checker module invokes the distance service, it first checks the cache whether distance and travel time associated with origin and/or delivery addresses are already stored in the cache. If this is the case, the rate checker will use the information in the cache instead of requesting the distance service to calculate the distances and traveling times. The use of the cache allows optimal performance and high throughput of quotations by the rate checker module.

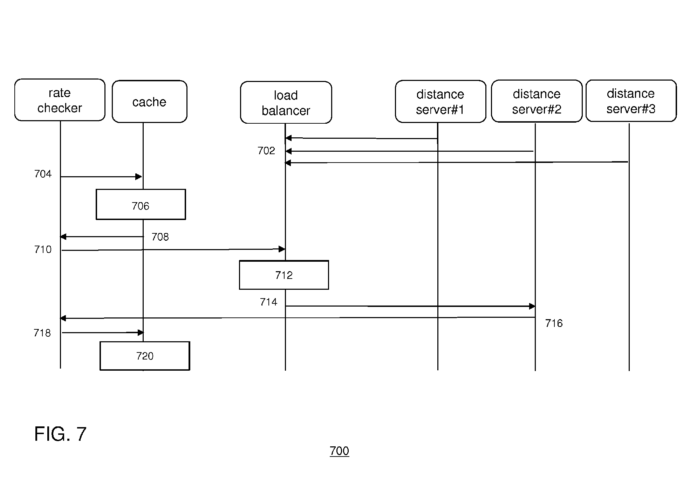

**Fig. 7** depicts a process flow that may be executed by a distance service module as described with reference to **Fig. 5** and **6****.** As shown in **Fig. 7****,** a load-balancer may continuously or periodically monitor the processing load of the distance servers. In an embodiment, the distance servers may send feedback information on the actual and/or historical processor load to the load balancer (step **702**). When the rate checker requires travel information, it may first send a cache request to the cache in order to check whether at least part of the requested travel information can be retrieved from the cache (step **704**). To that end, the cache request may comprise waypoints of the requested route (a collection address, an origin depot and a destination depot, a delivery address, and, optionally, one or more via-stations (e.g. hubs and/or a depots between the origin and destination depot)), which may be compared with information in the cache (step **706**). In response to the cache request, the cache may send a cache response to the rate checker (step **708**). If the cache response comprises the requested travel information, the rate checker may use that information for further processing without consulting the distance service. Alternatively, the cache response may comprise part of the requested travel information or no travel information. In that case, the rate checker may send a distance request comprising waypoints to the load balancer (step **710**).

The load-balancer may use the geographical information in the distance request and the feedback information of the distance servers to relay the distance request to the distance server that is most suitable for fast calculation of the distance and/or travel time between locations that are identified in the distance request (steps **712,714**). After calculation of the requested travel information, the distance server may send a distance response comprising the travel information to the rate checker (step **716**), which may send the calculated travel information and the associated waypoints to the cache (step **718**) for storage. The cache may store the information in an appropriate format (step **720**).

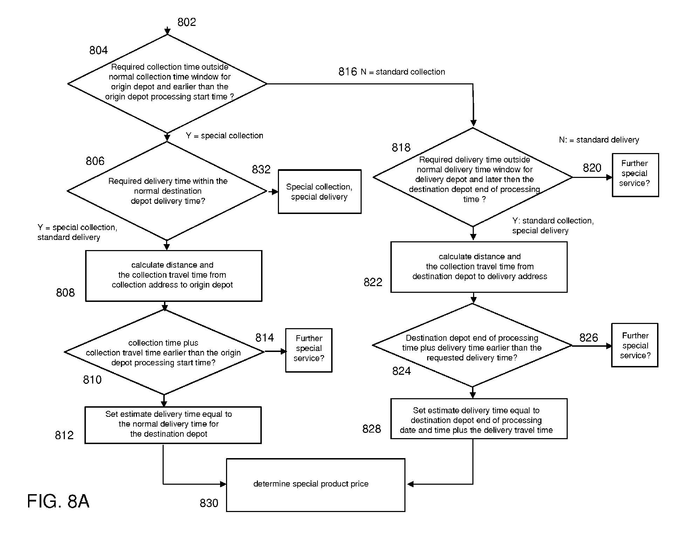

**Fig. 8A-8C** depict parts of flow charts of processes for determining the availability of one or more non-standard parcel services in a parcel delivery system according to an embodiment of the invention. In particular, **Fig. 8A-8C** depict flow charts of processes for determining the availability of non-standard parcel services that may be executed by the rate checker module in response to a customer request.

The rate checker module may receive the customer request, which may comprise a collection address, a delivery address, a required collection time and/or a required delivery time, a parcel type, weight information and/or volume information. Further, the rate checker module may determine the type of parcel (e.g. document or non-document) and use the information in the non-standard products database in order to check whether the parcel meets the maximum weight and/or volume requirements for a particular ad-hoc delivery service.

Further, the rate checker module may determine the origin depot and destination depot associated with the collection and delivery addresses respectively. For example, in an embodiment, the rate checker module may use the collection address postal code in order to determine an origin depot (as defined in the delivery network database). Similarly, the rate checker module may use the delivery address postal code in order to determine a destination depot (as defined in the delivery network database).

The rate checker module may determine which non-standard delivery services are available for the requested service (step **802**). To that end, the rate checker module may use the information in the delivery network database in order to check whether the required collection time is outside the normal collection time window of the origin depot and earlier than the origin depot processing start time associated with the collection time window (step **804**); and, whether the required delivery time is within the normal destination depot delivery time window (step **806**). If both conditions are met, the rate checker may determine that the customer request may be associated with an ad-hoc delivery service that involves ad-hoc collection and standard delivery.

The rate checker module may then call the distance service in order to calculate distance and the collection travel time from the collection address to origin depot (step **808**). If the collection time plus the collection travel time as calculated by the distance service is earlier than the origin depot processing start time (step **810**), then the rate checker module determines that the non-standard product is available.

In case the rate checker determines on the basis of the calculated distance that the thus determined ad-hoc delivery service (ad-hoc collection and standard delivery) is available, the rate checker module may set the estimated delivery time (EDT) to the normal delivery time for the destination depot (step **812**). The normal delivery time for the destination depot may be stored (or derived from information) in the delivery network database. Further, it may set a first product option code to the product code of the first non-standard product (e.g. the non-standard product ID as described with reference to **Fig. 4**), in this case a dedicated vehicle transport for collection only.

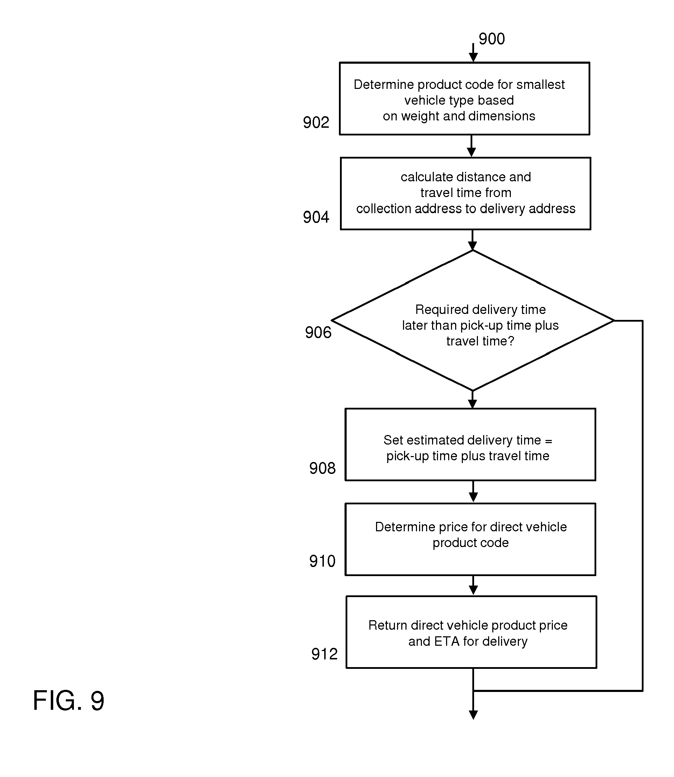

Alternatively, in case the rate checker determines on the basis of the calculated distance that the non-standard product (i.e. non-standard collection and standard delivery) is not possible, the rate checker module may continue the process by determining whether a further non-standard delivery service, e.g. a direct drive service, is available (step **814**). The direct drive service will be described in more detail with reference to **Fig. 9****.**

If the rate checker module may determine at process step **804** that the required collection time is within the normal collection time window for the origin depot. In that case, normal standard collection is possible (step **816**). The rate checker module may then further check whether the required delivery time is outside the normal destination depot delivery time window and later then the destination depot processing end time (step **818**). If these conditions are met, the rate checker may determine that the customer request may be associated with a non-standard delivery service that involves standard collection and non-standard delivery. Alternatively, if these conditions are not met (i.e. the required delivery time is inside the normal destination depot delivery time window), the rate checker module may determine that the customer request can be processed by the system as a standard process. In that case, the rate checker module may set the estimated delivery time (EDT) to the normal delivery time for the destination depot, set the product option code to standard delivery and may continue the process by determining whether a further non-standard service, e.g. a direct drive service, is available (step **820**).

If the rate checker module determines that the customer request can be associated with a non-standard delivery product that involves standard collection and non-standard delivery, the rate checker module may call the distance service in order to calculate the distance and the delivery travel time from destination depot to the delivery address (step **822**). If the destination depot processing end time plus the delivery travel time is earlier than the required delivery time, then the rate checker may determine that this non-standard delivery service is available (step **824**). Otherwise, the rate checker module may decide that this non-standard product is not available and will continue with determining the availability of further non-standard service, e.g. a direct drive services (step **826**).

In case the rate checker determines on the basis of the calculated distance that the second non-standard product (standard collection and non-standard delivery) is available, the rate checker module may set the estimated delivery time (EDT) to the destination depot end of processing time added to the delivery travel time. Further, it may set the product option code to the product code of the second non-standard product (e.g. a non-standard product ID as described with reference to **Fig. 4**), in this case a dedicated vehicle transport for delivery only.

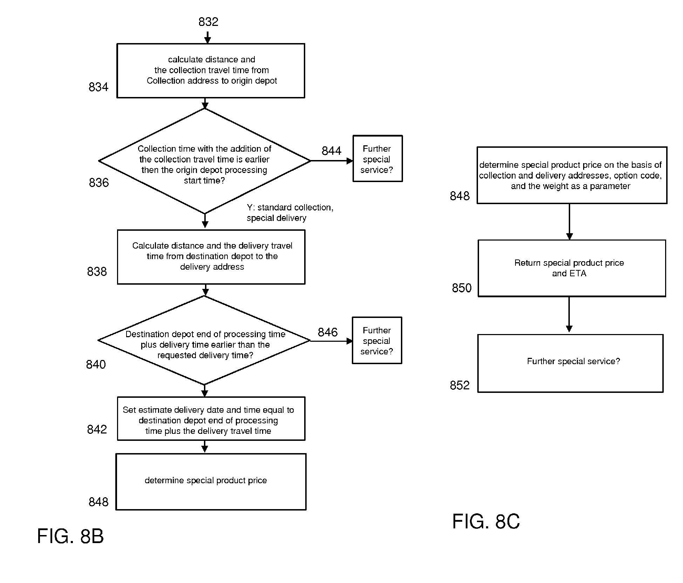

Alternatively, if the rate checker module determines in process step **804** that the required collection time is outside the normal collection time window for the origin depot and earlier than the origin depot processing start time; and in process step **806** that the required delivery time is outside the normal destination depot delivery time window and later then the destination depot processing end time, then the rate checker may determine that the non-standard product involves non-standard collection and non-standard delivery (step **832**). The rate checker process associated with this (third) non-standard delivery service is described in more detail with reference to **Fig. 8B****.**

The rate checker module may call the distance service for calculating distance and collection travel time from the collection address to the origin depot (step **834**). If the collection time plus the collection travel time is earlier than the origin depot processing start time (step **836**), then the rate checker module may call the distance service for calculating the distance and delivery time from the destination depot to the delivery address (step **838**).

If the collection time plus the collection travel time is not earlier than the origin depot processing start time (step **840**), then the rate checker may determine that the non-standard service is not available and continue with determining the availability of further non-standard delivery services, e.g. a direct drive services (step **844**).

Alternatively, if the destination depot processing end time plus the delivery travel time is earlier than the required delivery time, then the rate checker may set the estimated delivery time (EDT) equal to the destination depot end of processing time plus the delivery travel time (step **842**). Further, the rate checker module may set the product option code to the product code of a third non-standard product, in case a dedicated vehicle transport for both collection and delivery.

Hence, if the rate checker module has identified one or more non-standard delivery services that meet the customer request (e.g. standard collection / non-standard delivery, non-standard collection / standard delivery; non-standard delivery and collection), a quote for each of the available non-standard delivery services may be determined (steps **830,848** in **Fig. 8A** and **8B**).

As shown in **Fig. 8C****,** the rate checker module may request the rating module for generating a quote on the basis of one or more non-standard product parameters, including but not limited to: the product option code, collection and delivery addresses, and the weight of the parcel (step **848**).

The rating module may further use the non-standard product IDs to link the non-standard delivery service determined by the rate checker module with non-standard product information in the non-standard products database. The rating module may determine a price on the basis of a billing rate that is stored as part of vendor information in the non-standard product database and on the basis of information (e.g. distances and/or weight) in the rating request that is sent by the rate checker module to the rating module (step **850**).

After having received a price from the rating module, the rate checker may add the product option code, the estimated delivery time and price to the list of available services that need to be returned to the booking system. The rate checker module may then continue the process by determining whether a further non-standard delivery service is available (step **852**).

**Fig. 9** depicts part of a flow chart for determining the availability of a non-standard delivery service in a parcel delivery system according to another embodiment of the invention. In particular, **Fig. 9** depicts the flow chart associated with determining whether a direct vehicle service is available.

The process may start by the rate checker module determining the required vehicle type for a so-called direct vehicle service on the basis of the product code, weight and/or volume (size) of the shipment (step **902**). The dedicated vehicle type may be selected on the basis of the information in the non-standard product database as e.g. described with reference to **Fig. 4****.** The vehicle type information may be structured in a table together with associated product codes, weight, size and, optionally, the number of pallets. For example, the rate checker module may select the smallest suitable vehicle type that is available from a vendor and that can accommodate the consignment (weight and dimensions).

| **Dedicated vehicle type** | **Product code** | **Max weight** (Kg) | **Max Size (m)** | **Max nr pallets** |
|---|---|---|---|---|
| Long Wheelbase Transit Van | Prod 1 | 1,200 | 4x1.8x1.7 | 4 |
| 7.5t Truck | Prod 2 | 2,400 | 6x2.2x2.3 | 12 |
| 40ft Trailer | Prod 3 | 23,000 | 13.6x2.4x2.4 | 26 |

Thereafter, the rate checker may call the new distance service in order to obtain road distance and travel time between the collection and delivery addresses and check whether the required delivery time is later than the pick-up time and the travelling time. If that is the case, the estimated delivery time (EDT) may be set to the collection time and the travelling time.

Further, rate checker module may send a rating request to the rating module in order to receive a price of the direct vehicle service. The rating request may comprise the calculated distance and travelling time, the weight of the shipment, etc.. After having received a price, from the rating module, the rate checker module may add the product option code, the estimated delivery time and price to the list of available services that need to be returned to the booking system. The rate checker may send the list of available services to the booking system, wherein the order of the service in the list may be determined on the basis of certain parameters, e.g. estimated delivery time, price or product type.

Hence, from **Fig. 8A-8C** and **9** above it follows that the rate checker module in combination with the distance service enables the parcel delivery system to determine ad-hoc delivery services that can be processed by the depots in the delivery network and to generate real-time quotations in response to customer requests. In contrast with known parcel delivery systems, the parcel delivery system according to the invention dynamically generates data such as distance and travel time in response to a customer request, which may be used to generate a list of customized non-standard delivery services in response to a request of a customer.

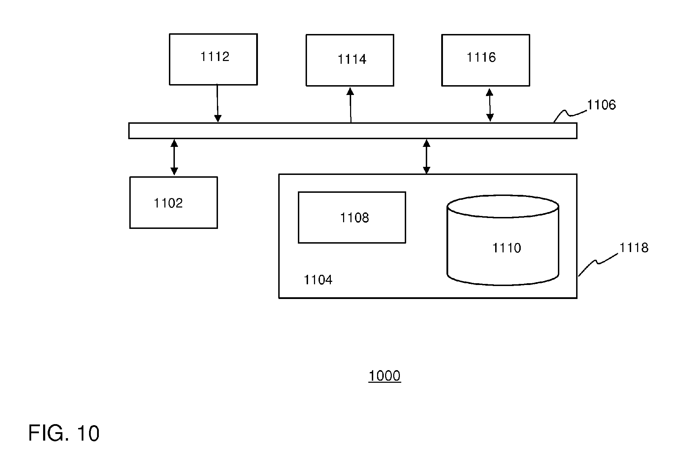

**Fig. 10** is a block diagram illustrating an exemplary data processing system that may be used in as described in this disclosure. Data processing system **1000** may include at least one processor **1002** coupled to memory elements **1004** through a system bus **1006.** As such, the data processing system may store program code within memory elements **1004.** Further, processor **1002** may execute the program code accessed from memory elements **1004** via system bus **1006.** In one aspect, data processing system may be implemented as a computer that is suitable for storing and/or executing program code. It should be appreciated, however, that data processing system **1000** may be implemented in the form of any system including a processor and memory that is capable of performing the functions described within this specification.

Memory elements **1004** may include one or more physical memory devices such as, for example, local memory **1008** and one or more bulk storage devices **1010.** Local memory may refer to random access memory or other non-persistent memory device(s) generally used during actual execution of the program code. A bulk storage device may be implemented as a hard drive or other persistent data storage device. The processing system **1000** may also include one or more cache memories (not shown) that provide temporary storage of at least some program code in order to reduce the number of times program code must be retrieved from bulk storage device **1010** during execution.

Input/output (I/O) devices depicted as input device **1012** and output device **1014** optionally can be coupled to the data processing system. Examples of input device may include, but are not limited to, for example, a keyboard, a pointing device such as a mouse, or the like. Examples of output device may include, but are not limited to, for example, a monitor or display, speakers, or the like. Input device and/or output device may be coupled to data processing system either directly or through intervening I/O controllers. A network adapter **1016** may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Modems, cable modems, and Ethernet cards are examples of different types of network adapter that may be used with data processing system **1000.**

As pictured in **FIG. 10****,** memory elements **1004** may store an application **1018.** It should be appreciated that data processing system **1000** may further execute an operating system (not shown) that can facilitate execution of the application. Application, being implemented in the form of executable program code, can be executed by data processing system **1000,** e.g., by processor **1002.** Responsive to executing application, data processing system may be configured to perform one or more operations to be described herein in further detail.

In one aspect, for example, data processing system **1000** may represent a client data processing system. In that case, application **1018** may represent a client application that, when executed, configures data processing system **1000** to perform the various functions described herein with reference to a "client". Examples of a client can include, but are not limited to, a personal computer, a portable computer, a mobile phone, or the like.

In another aspect, data processing system may represent a server. For example, data processing system may represent an (HTTP) server in which case application **1018,** when executed, may configure data processing system to perform (HTTP) server operations. In another aspect, data processing system may represent a module, unit or function as referred to in this specification.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

## Claims

1. Computer-implemented method for enabling the determination of ad-hoc parcel delivery services in a delivery network comprising one or more origin depots and one or more destination depots, the method comprising:
receiving a customer request for delivery of at least one parcel from a collection address via an origin depot and a destination depot to a delivery address, the request comprising a requested collection time and requested delivery time;
if said requested collection time and/or delivery time does not allow standard collection by said origin depot and/or standard delivery by said destination depot, requesting a distance service to calculate the traveling time between said collection address and said origin depot and/or between said destination depot and delivery address, said traveling time enabling determining whether ad-hoc collection of said parcel from said collection address to said origin depot and/or ad-hoc delivery from said destination depot to said delivery address is possible; wherein requesting said distance service comprises:
sending a distance request for calculation of said traveling time to at least one server comprising a load-balancing module; wherein said load-balancing module uses geographical information in said distance request to relay said distance request to at least one distance server of a plurality of distance servers, each server hosting a distance calculation function for calculating travel information between two or more locations in a predetermined geographical area.

2. Method according to claim 1 wherein requesting said distance service further comprises:
determining geographical location information on the basis of at least part of a collection address, an origin depot, a delivery address and/or a destination depot in said distance request;
using said geographical location information for selecting said server from said plurality of servers.

3. Method according to claims 1 or 2 wherein said plurality of servers is associated with a cache for storing travel information that is calculated by said distance calculation functions in said servers, requesting said distance service further comprising:
before sending said distance request to said load-balancing module, determining whether said requested travel distance is stored in said cache.

4. Method according to any of claims 1-3 wherein said servers are configured to send processing load information to said load-balancing module, said load-balancing module using said processing load information in combination with said geographical information for relaying said distance request to said at least one server.

5. Method according to any of claims 1-4 further comprising:
determining whether collection of said parcel by an origin depot and delivery by a destination depot of said delivery network is possible on the basis of said requested collection and delivery time and on the basis of depot information of said origin depot and/or said destination depot, said depot information comprising a standard collection and delivery time schedule.

6. Method according to any of claims 1-5 further comprising:
determining an origin depot on the basis of said collection address, said origin depot being configured to collect parcels in a predetermined collection area associated with said origin depot on the basis of said standard collection time schedule, said schedule comprising origin collection time windows and associated origin depot processing start times.

7. Method according to any of claims 1-6 further comprising:
determining a destination depot on the basis of said delivery address, said destination depot being configured to deliver parcels in a predetermined delivery area associated with said destination depot on the basis of said standard delivery time schedule, said schedule comprising destination collection time windows and associated destination depot processing end times.

8. Method according to any of claims 1-7 wherein collection by said origin depot is not possible if the requested collection time in said service information is not within a collection time window of said origin depot, and, optionally, if the parcel weight, parcel volume and/or parcel type identified in said service information cannot be processed by said origin depot.

9. Method according to any of claims 1-8 wherein delivery by said destination depot is not possible if said requested collection time is not within a delivery time window of said destination depot, and, optionally, if the parcel weight, parcel volume and/or parcel type identified in said service information cannot be processed by said destination depot.

10. Method according to any of claims 1-9 wherein executing said distance service for determining travel information includes:
determining an origin depot traveling time between said collection address and said origin depot; and/or, a destination depot traveling time between said destination depot and said delivery address.

11. Method according to claim 10 further comprising:
if said requested collection time plus said calculated origin depot traveling time is earlier than the origin depot processing start time associated with said collection time window; and, if said requested delivery time is within the delivery time window of said destination depot,
reporting that delivery of said parcel via said origin depot and said destination depot is possible by execution of an ad-hoc collection service for collection of said parcel from said collection address to said origin depot and delivery of said parcel by said destination depot to said delivery address.

12. Method according to claim 10 further comprising:
if said requested collection time is within the collection time window of said origin depot; and, if the destination depot processing end time associated with said delivery time window plus said calculated destination depot traveling time is earlier than said requested delivery time,
reporting that delivery of said parcel via said origin depot and said destination depot is possible by collection of said parcel by said origin depot and execution of an ad-hoc delivery service for delivery of said parcel from said destination depot to said delivery address.

13. Method according to claim 10 further comprising:
if said requested collection time plus said calculated origin depot traveling time is earlier than the origin depot processing start time associated with said collection time window; and, if the destination depot processing end time associated with said delivery time window plus said calculated destination depot traveling time is earlier than said required delivery time,
reporting that delivery of said parcel via said origin depot and said destination depot is possible by execution of an ad-hoc collection service for collection of said parcel from said collection address to said origin depot and execution of an ad-hoc delivery service for delivery of said parcel from said destination depot to said delivery address.

14. A server system for use in a delivery network comprising one or more origin depots and one or more destination depots, the server system comprising:
a computer readable storage medium having computer readable program code embodied therewith, said program code being configured for determining ad-hoc parcel delivery services in delivery network, and a processor, preferably a microprocessor, coupled to the computer readable storage medium, wherein responsive to executing the computer readable program code, the processor is configured to perform executable operations comprising:
receiving a customer request for delivery of at least one parcel from a collection address via an origin depot and a destination depot to a delivery address, the request comprising a requested collection time and a requested delivery time;
if said requested collection time and/or delivery time does not allow collection by said origin depot and/or delivery by said destination depot, requesting a distance service calculation of the traveling time between said collection address and said origin depot and/or between said destination depot and delivery address, said traveling time enabling determining whether ad-hoc collection of said parcel from said collection address to said origin depot and/or ad-hoc delivery from said destination depot to said delivery address is possible; wherein requesting said distance service comprises:
sending a distance request for calculation of said traveling time to at least one server comprising a load-balancing module; wherein said load-balancing module uses geographical information in said distance request to relay said distance request to at least one distance server of a plurality of distance servers, each server hosting a distance calculation function for calculating travel information between two or more locations in a predetermined geographical area.

15. A server system according to claim 14 wherein said distance service comprises a distance calculation function for calculating travel information, preferably a traveling time and/or distance between an address and a depot, and a cache for storing travel information calculated by said distance calculation function; and, wherein said executable operations associated with said distance service comprise:
determining if travel information associated with a collection address and an origin depot; and/or, a delivery address and a destination depot is stored in said cache;
if said travel information is not stored in said cache, executing said distance calculation function on the basis of the collection address and/or delivery address associated with said customer request; and,
storing said travel information and the associated collection address and/or delivery address in said cache.

16. Computer program product comprising software code portions configured for, when run in the memory of a computer, executing the method steps according to any of claims 1-13.
